Europäisches Patentamt

European Patent Office

Office européen des brevets

(19)

(11) Veröffentlichungsnummer: **0 036 508**
**B1**

(12) # EUROPÄISCHE PATENTSCHRIFT

(45) Veröffentlichungstag der Patentschrift:
**29.08.84**

(51) Int. Cl.³: **C 08 J 5/12,** B 32 B 15/08

(21) Anmeldenummer: **81101439.8**

(22) Anmeldetag: **27.02.81**

(54) **Profil für Fenster oder Türen.**

(30) Priorität: **03.03.80 DE 3008074**

(43) Veröffentlichungstag der Anmeldung:
**30.09.81 Patentblatt 81/39**

(45) Bekanntmachung des Hinweises auf die Patenterteilung:
**29.08.84 Patentblatt 84/35**

(84) Benannte Vertragsstaaten:
**AT BE CH FR GB LI LU NL SE**

(56) Entgegenhaltungen:
**DE - A - 2 415 986**
**DE - A - 2 547 609**
**DE - A - 2 558 450**
**DE - A - 2 647 388**
**DE - A - 2 840 226**
**DE - B - 2 363 259**

(73) Patentinhaber: **Fulgurit GmbH & Co.
Kommanditgesellschaft, Postfach 1208,
D-3050 Wunstorf 1 (DE)**

(72) Erfinder: **Kleiss, Joachim, Albrecht-Dürer-Strasse 25,
D-8716 Dettelbach/Main (DE)**

(74) Vertreter: **Wehser, Wulf, Dipl.-Ing. et al,
Roscherstrasse 12, D-3000 Hannover 1 (DE)**

## Beschreibung

Die Erfindung betrifft ein Profil für Fenster oder Türen, das aus einem stranggepreßten Aluminiumhohlprofil mit einer Kunststoffummantelung aus Polyurethanschaum besteht, wobei zwischen der Oberfläche des Aluminiumprofils und dem Kunststoffschaum ein Primer als Haftgrund für den Polyurethanschaum vorgesehen ist.

Bei bekannten Profilen dieser Art besteht der Primer aus einer wäßrigen Polyurethan-Dispersion mit einem Zusatz einer reaktiven Komponente auf Siliciumbasis, die durch Filmbildung bei der Verdunstung des Wassers eine Haftung auf dem metallischen Untergrund ergibt.

Nachteilig bei dieser bekannten Anordnung ist es, daß sich der obengenannte Primer nicht im Spritzverfahren verarbeiten läßt, so daß seine Aufbringung arbeitsintensiv und umständlich ist. Am rationellsten zur Aufbringung dieses Primers hat sich noch das Tauchverfahren erwiesen, was jedoch den Nachteil hat, daß aus Raumersparnisgründen die Ausgangsprofilstangen mit einer Länge von etwa sechs Metern nach dem Tauchen aufgestellt werden müssen, so daß der überschüssige Primer abläuft. Dies führt dazu, daß über die Länge der Stange sich eine ungleichmäßige Schichtdicke des Primers ergibt.

Ein weiterer Nachteil besteht darin, daß der bekannte Primer ein relativ schlechter Haftvermittler ist, so daß sich mit diesem Primer allein die aufgrund der unterschiedlichen Ausdehnungseffizienten zwischen Kunststoff und Aluminium auftretenden Längenunterscheide, die zu einem »Herauswachsen« des Aluminiumprofiles infolge des Schrumpfens der Kunststoffummantelung führen, nicht hinreichend verhindern lassen.

Der Erfindung liegt demgemäß die Aufgabe zugrunde, ein Profil der eingangs genannten Art zu schaffen, bei welchem das Schrumpfen der Kunststoffummantelung weitgehend verhindert ist und welches sich in einfacher Weise herstellen läßt.

Diese Aufgabe wird erfindungsgemäß dadurch gelöst, daß der Primer eine Harz-Pigment-Säure-Verbindung ist, wobei das Harz Phenolharz und/oder Polyvinylbutyral, das Pigment eine Zinkverbindung und die Säure phosphorsäure ist.

Hierbei hat die Säure die Aufgabe, die Haftungsreaktionen mit dem metallischen Untergrund herbeizuführen, während die Pigmente einerseits die Haftungsreaktionen mit der Kunststoffummantelung herbeiführen sollen und andererseits der augenscheinlichen Feststellung der Schichtdicke dienen.

Zwar ist aus der Deutschen Patentschrift 2 363 259 eine Klebemasse bekannt, die Harz, Pigment und Säure enthält, jedoch stehen hier Harz, Pigment und Säure in Verbindung mit weiteren Bestandteilen, wobei die bekannte Klebemasse so zähflüssig ist, daß sie durch Aufwalzen verarbeitet werden muß. Die bekannte Klebemasse ist daher als Primer im Sinne der Erfindung nicht einsetzbar.

Als besonders vorteilhaft hat sich herausgestellt, wenn der Primer eine Zusammensetzung nach dem folgenden Beispiel aufweist:

Beispiel

| 8% | Polyvinylbutyral |
| 4,5% | Phenolharz |
| 1,5 | Schwebemittel |
| 50% | Alkohol (einwertig) |
| 16% | Isopropylalkohol |
| 3% | Extender |
| 9% | aktive Pigmente |
| 6% | inerte Pigmente |
| 1,5% | Phosphorsäure (85%ig) |
| 0,5% | destilliertes Wasser |

In dem obigen Beispiel können die aktiven Pigmente Zinkchromat, vorzugsweise Zinktetraoxichromat oder Zinkphosphat sein, während die inerten Pigmente Titandioxyd oder Eisenoxyd sind.

Ob Zinkchromat oder Zinkphosphat verwendet wird, hängt von den jeweiligen Anwendungsfällen ab, da Zinkchromat zu den ärztlich vorsorgepflichtigen Stoffen gehört.

Die in dem obigen Beispiel angegebenen Schwebemittel können beispielsweise Bentonite sein. Bei den Extendern handelt es sich um Füllstoffe, beispielsweise um Mikrotalkum und/oder Glimmer.

Die Verwendung von Isopropylalkohol hat den Vorteil, daß die Verbindung rasch trocknet. Sie hat allerdings den Nachteil, daß die Nichtbrennbarkeit nicht gesichert ist. Wenn diese erreicht werden soll, ist es vorteilhaft wenn der Isopropylalkohol durch Wasser ersetzt ist. Auf diese Weise wird eine Dispersion gebildet, die zwar langsamer auftrocknet, aber den Vorteil der Nichtbrennbarkeit hat.

Mit der Verwendung eines derartigen Primers wird in überraschender Weise erreicht, daß sich entsprechend der nachstehend beschriebenen Prüfmethode eine Haftungsverbesserung von tausend Prozent erreichen läßt.

Auf diese Weise wird es möglich, die erfindungsgemäß ausgestalteten Profile so herzustellen, daß für die später herzustellenden Eckverbindungen entweder nur sehr geringe oder keine Nacharbeit erforderlich ist. Die mit den erfindungsgemäßen Profilen hergestellten Fenster oder Türen können außerdem erheblich größeren Temperaturschwankungen und entsprechenden Dauerbelastungen ausgesetzt sein, ohne sich in ihrer Form in nachteiliger Weise zu verändern bzw. ohne daß Spalte und Risse im Bereich der Eckverbindungen auftreten.

Ein weiterer Vorteil der erfindungsgemäßen Anordnung besteht darin, daß sich die erfindungsgemäßen Profile sehr viel einfacher und sauberer und damit genauer herstellen lassen als Profile der bekannten Art, weil der erfindungsgemäße Primer sich im Gegensatz zu den bekannten Primer im Spritzverfahren verarbeiten läßt. Es ergibt sich mithin der weitere Vorteil, daß eine Durchlaufspritzanlage installiert werden kann, die die durchlaufenden Aluminiumstangen allseits ganz gleichmäßig mit Primer versieht.

Zur Ermittlung des obengenannten Primers waren umfangreiche Versuche erforderlich. Diese bestanden darin, daß mit den verschiedenen Haftvermittlern und/oder auch Oberflächengestaltungen versehene Aluminiumprofile umschäumt wurden, worauf von den fertigen Profilen zehn Zentimeter lange Abschnitte abgelängt wurden, die anschließend verschiedenen Temperatur- und Hydrolysebelastungen durch Behandlung mit Wasserdampf bei 100° Celsius (373 Kelvin) ausgesetzt wurden. Ferner wurden Temperaturbelastungen im Kältebereich bis —40° Celsius (233 Kelvin) in einer Kältekammer vorgenommen.

Nach Aufbringung der verschiedenen Temperaturbelastungen wurden bei Zimmertemperatur die jeweiligen Schrumpfungen des Kunststoffmantels, also das Zurückweichen des Polyurethanschaums gegenüber den Aluminiumkernen, auf einer Seite der Versuchsstücke gemessen. Hierbei ergab sich nach einer bestimmten Anzahl von Versuchszyklen bei mit dem bekannten Primer versehenen Aluminiumprofilen mit glatter Oberfläche eine Längenänderung des Polyurethanschaumstoffes gegenüber der Länge des Aluminiumprofiles von 0,3 bis 0,4 mm auf jeder Seite des Versuchsstückes. Bei einer Behandlung desselben Aluminiumprofiles mit glatter Oberfläche mit dem erfindungsgemäßen Primer unter Verwendung desselben Schaumstoffquerschnittes ergab sich nach diesen Versuchsbedingungen eine Längenänderung durch Zurückweichen des Schaumstoffprofiles on 0,03 bis 0,04 mm auf beiden Seiten, so daß sich auf diese Weise eine Haftungsverbesserung im Verhältnis von 10 : 1 zugunsten der erfindungsgemäßen Anordnung ergeben hat.

Die obengenannten Versuche wurden ferner mit anderen Primern durchgeführt, die aber selbst gegenüber dem obengenannten bekannten Primer noch weit schlechtere Ergebnisse lieferten.

Schließlich wurden die Versuche außerdem durch verschiedene Behandlungen der Aluminumoberfläche ergänzt, mit welchen die Oberflächenrauhigkeit der Aluminiumoberfläche erhöht wurde, wodurch sich zwar die absoluten Werte hinsichtlich der Haftung verbesserten, das Verhältnis zwischen den Auswirkungen der beiden Primer aber unberührt blieb.

Wie weitere Versuche ergeben haben, läßt sich der erfindungsgemäße Primer außerdem mit denselben Vorteilen auf Profile anwenden, die Kerne haben, die aus Stahl bestehen. Ein Stahlkern ist hinsichtlich seines Ausdehnungskoeffizienten in bezug auf den Kunststoffmantel um den Faktor 3 günstiger als ein Aluminiumkern.

## Patentansprüche

1. Profil für Fenster oder Türen, das aus einem stranggepreßten Aluminiumhohlprofil mit einer Kunststoffummantelung aus Polyurethanschaum besteht, wobei zwischen der Oberfläche des Aluminiumprofils und dem Kunststoffschaum ein Primer als Haftgrund für den Polyurethanschaum vorgesehen ist, dadurch gekennzeichnet, daß der Primer eine Harz-Pigment-Säure-Verbindung ist, wobei das Harz Phenolharz und/oder Polyvinylbutyral, das Pigment eine Zinkverbindung und die Säure Phosphorsäure ist.

2. Profil nach Anspruch 1, dadurch gekennzeichnet, daß es mit einem Primer hergestellt worden ist, der folgende Zusammensetzung aufweist:

| | |
|---|---|
| 8% | Polyvinylbutyral |
| 4,5% | Phenolharz |
| 1,5% | Schwebemittel |
| 50% | Alkohol (einwertig) |
| 16% | Isopropylalkohol |
| 3% | Extender |
| 9% | aktive Pigmente |
| 6% | inerte Pigmente |
| 1,5% | Phosphorsäure (85%ig) |
| 0,5% | destilliertes Wasser |

3. Profil nach Anspruch 2, dadurch gekennzeichnet, daß die aktiven Pigmente Zinkchromat, vorzugsweise Zinktetraoxichromat oder Zinkphosphat und die inerten Pigmente Titandioxyd oder Eisenoxyd sind.

4. Profil nach Anspruch 2, dadurch gekennzeichnet, daß der Isopropylalkohol durch Wasser ersetzt ist.

5. Verwendung eines Primers nach einem der vorhergehenden Ansprüche für Fenster- oder Türprofile, die einen aus Stahl bestehenden Metallkern haben, der von einer Kunststoffummantelung aus Polyurethanschaum umgeben ist.

## Claims

1. A profile for windows or doors, which consists of an extruded aluminium hollow profile with a plastics coating of polyurethane foam, in which a primer, as adhesive base for the polyurethane foam, is provided between the surface of the aluminium profile and the plastics foam, characterised in that the primer is a resin/pigment/acid compound, in which the resin is phenolic resin and/or polyvinylbutyral, the pigment is a zinc compound and the acid is phosphoric acid.

2. A profile according to claim 1, characterised in that is has been produced with a primer which has the following composition:

| | |
|---|---|
| 8% | polyvinylbutyral |
| 4,5% | phenolic resin |
| 1,5% | suspension agent |
| 50% | alcohol (monovalent) |

16%    isopropyl alcohol
3%    extender
9%    active pigments
6%    inert pigments
1,5%    phosphoric acid (85%)
0,5%    distilled water

3. A profile according to claim 2, characterised in that the active pigments are zinc chromate, preferably zinc tetraoxichromate or zinc phosphate and the inert pigments are titanium dioxide or iron oxide.

4. A profile according to claim 2, characterised in that the isopropyl alcohol is replaced by water.

5. Use of a primer according to one of the preceding claims for window or door profiles which have a metal core which consists of steel and which is surrounded by a plastics coating of polyurethane foam.

## Revendications

1. Profilé pour fenêtres ou portes, constitué par un profilé creux en aluminium extrudé comprenant une enveloppe en matière synthétique en mousse de polyuréthane, une couche de fond étant prévue entre la surface du profilée en aluminium et la couche de matière synthétique pour constituer un fond convenant à l'adhérence de la couche de polyuréthane, caractérisé en ce que la couche de fond est une combinaison chimique de résine-pigment-acide, la résine étant une résine phénolique et/ou du polyvinylbutyral, le pigment un composé de zinc et l'acide de l'acide phosphorique.

2. Profilé selon la revendication 1, caractérisé en ce que il est réalisé au moyen d'une couche de fond ayant la composition suivante:

8%    Polyvinylbutyral
4,5%    Résine phénolique
1,5%    Agent de suspension
50%    Alcool (monovalent)
16%    Alcool isopropylique
3%    Extenseur
9%    Pigments actifs
6%    Pigments inertes
1,5%    Acide phosphorique (à 85%)
0,5%    Eau distillée

3. Profilé selon la revendication 2, caractérisé en ce que les pigments actifs sont du chromate de zinc, de préférence du tétraoxychromate de zinc ou du phosphate de zinc, et les pigments inertes du dioxyde de titane ou de l'oxyde de fer.

4. Profilé selon la revendication 2, caractérisé en ce que l'alcool isopropylique est remplacé par de l'eau.

5. Utilisation d'une couche de fond selon l'une quelconque des revendications précédentes pour des profilés pour fenêtres ou portes ayant un coeur métallique en acier entouré par une enveloppe en matière synthétique en mousse de polyuréthane.